Europäisches Patentamt

European Patent Office

Office européen des brevets

(11) Publication number: 0 644 159 A2

## EUROPEAN PATENT APPLICATION

(21) Application number: 94114783.7

(22) Date of filing: 20.09.94

(51) Int. Cl.6: **C02F 1/38**, C02F 1/78, C02F 1/72, C02F 1/28

(30) Priority: 22.09.93 JP 269373/93
07.09.94 JP 214069/94

(43) Date of publication of application:
**22.03.95 Bulletin 95/12**

(84) Designated Contracting States:
**AT BE CH DE DK ES FR GB GR IE IT LI LU MC
NL PT SE**

(71) Applicant: **Fujimoto, Shigenobu**
**188, Oaza-Yuritani,**
**Miwa-cho**
**Kuga-gun,**
**Yamaguchi 740-12 (JP)**
Applicant: **Bouzono, Hiroyuki**
**7-27-1007, Nishi-Hakushimacho,**
**Naka-ku**
**Hiroshima-shi,**
**Hiroshima 730 (JP)**
Applicant: **Nakatani, Yutaka**
**3-9-3-811, Koihonmachi,**
**Nishi-ku**
**Hiroshima-shi,**
**Hiroshima 736 (JP)**

(72) Inventor: **Fujimoto, Shigenobu**
**188, Oaza-Yuritani,**
**Miwa-cho**
**Kuga-gun,**
**Yamaguchi 740-12 (JP)**
Inventor: **Bouzono, Hiroyuki**
**7-27-1007, Nishi-Hakushimacho,**
**Naka-ku**
**Hiroshima-shi,**
**Hiroshima 730 (JP)**
Inventor: **Nakatani, Yutaka**
**3-9-3-811, Koihonmachi,**
**Nishi-ku**
**Hiroshima-shi,**
**Hiroshima 736 (JP)**

(74) Representative: **Dallmeyer, Georg et al**
**Patentanwälte**
**Von Kreisler-Selting-Werner**
**Bahnhofsvorplatz 1 (Deichmannhaus)**
**D-50667 Köln (DE)**

(54) **Water treatment method and apparatus on the basis of a liquid cyclone.**

(57) Untreated water introduced into a water spinning treatment apparatus is spun therein counterclockwise in the northern hemisphere or clockwise in the southern hemisphere as viewed in the direction of gravity, thereby separating undesirable substances contained in the untreated water. Using this method, impurities are removed from turbid water to obtain purified water, or sea water is desalinized for conversion to fresh water.

FIG. 1

## BACKGROUND OF THE INVENTION

### Field of the Invention

The present invention relates to a water treatment method for separating undesirable substances from water containing such substances, and an apparatus for implementing the same method.

### Description of Related Art

Methods commonly used to remove impurities contained in turbid water to obtain clean, purified water include the batch process wherein the turbid water to be treated is fed into a plurality of large tanks in time series with impurities being caused to settle out as sludge by centrifugal force. To allow the impurity separation to proceed faster, the activated sludge process is also widely employed that involves the sedimentation or filtration of impurities in tanks with chlorine or other chemicals applied during the process.

These known methods, however, require a large area for water treatment as well as expensive tanks and a large power for moving the untreated water. These methods also involve a problem in that the treatment work needs special care because of the use of chloride that can cause trichloromethane and that can be hazardous to humans.

## SUMMARY OF THE INVENTION

One object of the present invention is to provide a method of water treatment capable of separating impurities contained in turbid water and obtaining purified water in a very simple and easy manner by using the principle of a liquid cyclone, and an apparatus for water treatment implementing the same method.

Another object of the present invention is to provide a method of water treatment capable of obtaining fresh water from sea water in a simple manner, and an apparatus for water treatment implementing the same method.

According to the present invention, untreated water containing undesirable substances is introduced, with its velocity increased under pressure, and is spun to the left (in a counterclockwise direction) in the northern hemisphere or the right (in a clockwise direction) in the southern hemisphere as viewed in the direction of gravity. With this spinning motion, the untreated water rises upward in a helical path while being spun counterclockwise or clockwise, and at the lowermost point of the helical stream, the substances having densities different than the density of water (i.e. having densities greater than the density of water) are precipitated and separated from the water. The purified water, with undesirable substances removed from it, rises upward and is discharged to the outside. When the same treatment was carried out, except that the water was spun to the right (in a clockwise direction) in the northern hemisphere or the left (in a counterclockwise direction) in the southern hemisphere as viewed in the direction of gravity, it was not possible to separate the substances. The reason for this is believed to be that since the rotational force, or the torque, is the inertia of matter with the direction of gravity as the axis, natural fluids in the northern (southern) hemisphere are subjected to a large counterclockwise (clockwise) rotational force, resulting in the formation of a counterclockwise (clockwise) natural swirl.

In the above treatment process, a magnetic field is applied to the untreated water before introduction into the water spinning treatment apparatus, and/or to the treated water after the spinning treatment. Furthermore, an oxidation gas (air, oxygen, ozone, or the like) is introduced into the water during the spinning treatment, to oxidize the substances to facilitate separation.

The above and further objects and features of the invention will more fully be apparent from the following detailed description with accompanying drawings.

## BRIEF DESCRIPTION OF THE DRAWINGS

FIG. 1 is a cross-sectional view of a water spinning treatment apparatus according to the present invention;

FIG. 2 is a plan view of the water spinning treatment apparatus according to the present invention;

FIG. 3 is a side view of an inlet section through which untreated water is introduced into the water spinning treatment apparatus shown in FIGS. 1 and 2;

FIG. 4 is a side view of an outlet section through which treated water is discharged from the water spinning treatment apparatus shown in FIGS. 1 and 2; and

FIG. 5 is a schematic diagram showing the general construction of a water treatment apparatus according to the present invention.

## DESCRIPTION OF THE PREFERRED EMBODIMENTS

An embodiment of the present invention will be described in detail below with reference to the accompanying drawings. The embodiment described below is one used in the northern hemisphere.

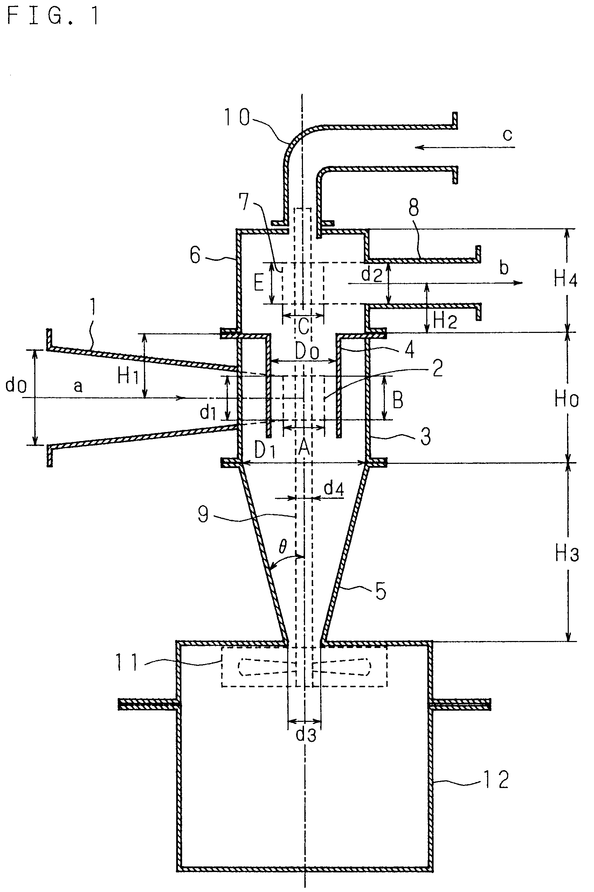

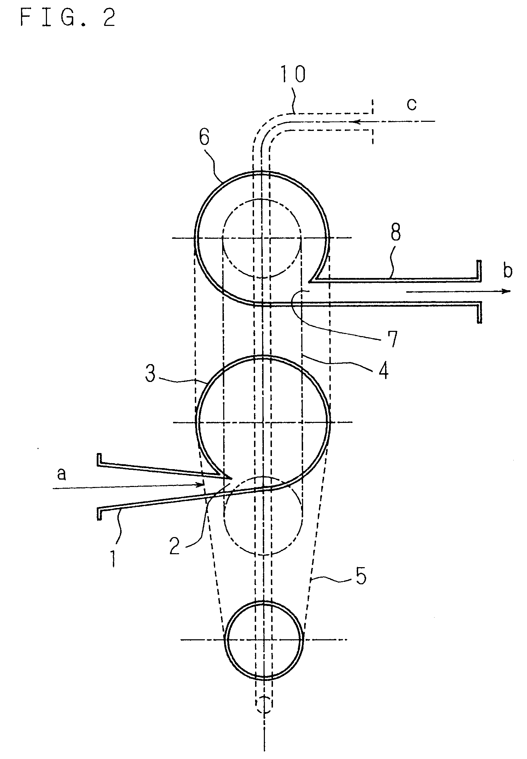

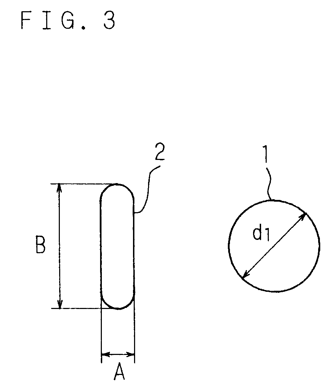

FIGS. 1 and 2 are, respectively, a cross-sectional view and a plan view, showing a water spinning treatment apparatus for implementing the water treatment method of the present invention. In the figures, the numeral 1 designates a cylindrically shaped inlet pipe through which untreated water is introduced; the base end of the inlet pipe 1 is connected to a lift pump (not shown). The inlet pipe 1 has an inner diameter that gradually decreases from the base toward the tip thereof (inner diameter at base: $d_0$, inner diameter at tip: $d_1$). The tip of the inlet pipe 1 forms an opening 2 having a rectangular cross section (width: A, height B). The opening 2 communicates with a spin cylinder 3 (inner diameter: $D_1$, height $H_0$). The height measured from the center of the opening 2 to the uppermost end of the spin cylinder 3 is designated as $H_1$. The cross sections of the opening 2 and the tip of the inlet pipe 1 are shown in FIG. 3.

Installed in the center of the spin cylinder 3 is a flanged inner baffle cylinder 4 (inner diameter: $D_0$) whose flange is joined to the inner wall of the spin cylinder 3. The height of the inner baffle cylinder 4 is 0.6 to 0.8 times the height $H_0$ of the spin cylinder 3. Connected to the lowermost end of the spin cylinder 3 is a truncated cone-shaped (funnel-shaped) separation cylinder 5 (height: $H_3$) whose diameter decreases toward its bottom (inner diameter at top: $D_1$, inner diameter at bottom: $d_3$). The angle $\theta$ between the axis and the generators in the separation cylinder 5 is within a range of 3.5 to 17.5 degrees. The bottom of the separation cylinder 5 is connected to a residue container 12 which is provided with a swirl prevention plate 11 having a plurality of blades.

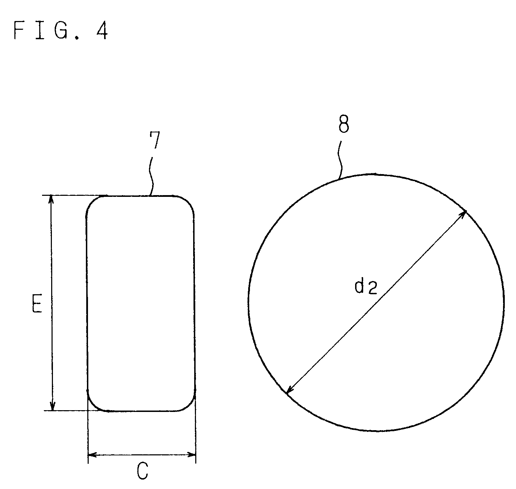

Connected to the uppermost end of the spin cylinder 3 is a riser cylinder 6 (inner diameter: $D_1$, height: $H_4$), to which a cylindrically shaped outlet pipe 8 (inner diameter: $d_2$) is connected through an opening 7 having a rectangular cross section (width: C, height: E). The height measured from the center of the opening 7 to the uppermost end of the spin cylinder 3 is designated as $H_2$. The cross sections of the outlet pipe 8 and the opening 7 are shown in FIG. 4.

Connected to the top of the riser cylinder 6 is a gas supply pipe 10 through which air, oxygen, or ozone is supplied. A gas passage pipe 9 (inner diameter: $d_4$) is installed which communicates with the gas supply pipe 10 and extends through the interiors of the riser cylinder 6, inner baffle cylinder 4, and separation cylinder 5; in the section of the gas passage pipe 9 where it passes through the separation cylinder 5, there are formed many holes so that an oxidation gas supplied from the gas supply pipe 10 is sprayed around the gas passage pipe 9.

Next, we will describe how untreated water, such as turbid water, is treated in the above-described apparatus. Untreated water, maintained at a constant pressure, is further pressurized and accelerated through the inlet pipe 1. The water thus pressurized and accelerated is injected at high speed through the opening 2 into the spin cylinder 3 tangentially from the right, as shown by arrow a in the figure, so that the water is spun in a counterclockwise direction as viewed in the direction of gravity (as viewed from above the plane of FIG. 2).

The water injected into the spin cylinder 3 forms a swirling stream. When the swirl stream velocity and the taper angle $\theta$ of the separation cylinder 5 are so set that the stream reaches midway down the conical walls of the separation cylinder 5 by the force of gravity, impurities contained in the water and having different densities than the density of water are precipitated and separated from the lowermost end of the swirl stream, and the thus separated residues are discharged into the residue container 12. At this time, the swirl prevention plate 11 serves to cause the residues to fall smoothly into the residue container 12.

During the above process, the oxidation gas, consisting of air, oxygen, or ozone, supplied through the gas supply pipe 10, as shown by arrow c in the figure, is sprayed from the gas passage pipe 9 into the separation cylinder 5, causing the oxidation of impurity metals or easily oxidizable substances to proceed faster, thus crystallizing the minuscule impurity molecules for increased size and weight and thereby facilitating the precipitation and separation of the impurities. This can even remove the toxicity and odors of activated metals. The oxidation, as described above, can also be accelerated when the amount of dissolved oxygen is increased by applying a magnetic field to the untreated water before it is introduced into the spin cylinder 3. Furthermore, by magnetizing the untreated water before introduction into the spin cylinder 3, it becomes possible to precipitate and separate even finer impurity particles, thus increasing the purification capability.

After the impurities contained in the water have been discharged into the residue container 12, the purified water with reduced weight is given an upward spiraling force like a whirlwind, and rises cyclonically upward through the inner baffle cylinder 4, until it is discharged into the outlet pipe 8, as shown by arrow b in the figure, through the opening 7 provided tangentially along the right-hand side of the riser pipe 6.

The impurity separation method of the present invention, which utilizes the principle of a liquid cyclone, requires that the dimensions of the water treatment apparatus (especially, the dimensions of the water passage and the container for forming the swirling stream) should be accurately defined to ensure efficient separation of impurities. The following describes how these dimensions are defined.

The inner diameter $d_1$ at the tip of the inlet pipe 1 has the relationship as defined by the following equation (1) with respect to the inner diameter $d_0$ at the base thereof.

$$1/3 \, d_0 \leqq d_1 \leqq d_0 \qquad (1)$$

When separating impurities from a liquid fluid such as water by using a cyclone, an upward spiraling stream (helical stream) does not occur unless the stream velocity is at least 10 to 30 m/second. Since the critical velocity of water is usually about 2 m/second at 1 atm, the above-stated stream velocity cannot be attained unless the water is pressurized to at least 5 to 15 atms. Since a standard lift pump is capable of delivering a pressure of 2 to 6 atms, the water needs to be pressurized for acceleration at some point through the inlet pipe 1. The above equation (1) indicates that the cross section of the inlet pipe 1 is reduced toward the downstream end, thereby increasing the pressure. When the entrance velocity at the entrance to the inlet pipe 1 is designated as $v_0$, and the exit velocity at the exit from the inlet pipe 1 as $v_1$, the exit velocity $v_1$ can be calculated from $v_1 = d_0/d_1 \times v_0$; therefore, when the lift pump has a 2-atm capacity, if $d_1 = d_0/3$, then $v_1 = 9 \times 2 \times 2 = 36$ m/second, and when the pump has a 6-atm capacity, if $d_1 = d_0$, then $v_1 = v_0 = 6 \times 2 = 12$ m/second.

For the above-stated reason, the dimensions of other parts are also defined. For example, the relationship between the inner diameter $D_0$ of the inner baffle cylinder 4 and the above-mentioned $d_0$ satisfies the following equation (2).

$$3/2 \, d_0 \leqq D_0 \leqq 5/2 \, d_0 \qquad (2)$$

This dimension is slightly larger than that at which the swirl stream velocity causes an upward spiraling stream, and is determined by the above-mentioned $D_1$, the generating angle $\theta$ of the separation cylinder 5, the viscosity of the fluid, etc.

Fluid movements inside the cyclone are three-dimensional and complex, of which the tangential velocities have the greatest effect on the separation performance and pressure loss. The fluid motion forms a double vortex, and the tangential velocity $v_t$ of the outer vortex increases toward the center, as in the case of a centrifugal separator, and is expressed by the following equation (3).

$$v_t r^n = c \qquad (3)$$

where

r: $D_1/2$

n: exponent ($0.5 \leqq n \leqq 0.8$)

c: constant

In the center, a constant spiral rotation (a forced vortex) occurs, where $v_t$ is expressed by the following equation (4).

$$v_t = cr \qquad (4)$$

The boundary between these two vortexes has a radius about 0.6 times $D_0/2$.

Further, $v_t$ along the circumferential wall of the cyclone is generally not equal to the injection velocity $v_i$ (the velocity through the opening 2). Hence, using the dimensions of the opening 2 (width: A, height: B), the radius $r$ ($= D_1/2$) at which $v_t$ becomes equal to $v_i$ is expressed by the following equation (5).

$$r = 2.56 \times A \times B/D_0 \qquad (5)$$

Hence, in the portion between the circumferential wall of the cyclone and the point in the cyclone at which the radius is 0.6 times $D_0/2$, $v_t$ is expressed by the following equation (6).

$$v_t r^n = v_i \times (D_1/2)^n = v_i \times (2.56 \times A \times B/D_0)^n$$
$$v_t = v_i \times \{2.56 \times A \times B/(r \times D_0)\}^n \qquad (6)$$

The separation structure of the cyclone is a mixture of the horizontal stream type and the upward spiraling stream type. In the outer vortex where the stream spirals downward, particles are gradually settled out and drop along the walls as the fluid is rotated through several revolutions; this operation can be considered in a manner similar to the horizontal stream type. On the other hand, in the portion where the stream is reversed and enters the inner upward vortex, separation of the upward spiraling stream type is performed as in a centrifugal separator.

When the smallest separable particle diameter is designated as $D_{min}$, and when the particles are such that they settle downward by distance h while the fluid injected through the opening 2 at velocity $v_i$ is being rotated through N revolutions along the cylindrical wall (radius: $r = D_1/2$) while retaining the same cross-sectional shape as the opening 2, the settling velocity $V_{tc}$ by the centrifugal force is expressed by the following equation (7).

$$V_{tc} = D_{min}^2 \times (\rho_s - \rho_f) \times v_i^2/(18 \times \mu \times r) \qquad (7)$$

where

$\rho_s$: fine particle impurity density

$\rho_f$: fluid density

$\mu$: fluid viscosity

The time t required for the fluid to rotate by N revolutions is expressed by the following equation (8), and for the complete separation to take place, the time t satisfies the following equation (9).

$$t = 2\pi \times r \times N/v_i \quad (8)$$

$$t \geq h/v_{tc} \quad (9)$$

Hence, for the smallest particles completely separated, the following equation (10) is satisfied, and as a result, $D_{min}$ is obtained fr m the following equation (11).

$$h/V_{tc} = 2\pi \times R \times N/v_i \quad (10)$$

$$D_{min} = [9 \times \mu \times h / \{\pi \times N \times v_i \times (\rho_s - \rho_f)\}]^{-1/2} \quad (11)$$

From the above, it can be considered that part of the small particles are collected according to the distance from the wall at the opening 2, which is the same as in horizontal stream type gravity sedimentation equipment.

When the particles are such that the centrifugal force and the drag of the fluid flowing inward are in equilibrium at a point corresponding to the radius of the inner baffle cylinder 4, the exponent n is about 0.5, and at that time, the smallest separable particle diameter $D_{max}$ is given by the following equation (12).

$$D_{max} = [18 \times \mu / \{\pi \times (\rho_s - \rho_f) \times v_i\}]^{1/2} \times \{D_0 / (2.26 \times H^{1/2})\} \quad (12)$$

Thus, limitations are placed on the dimensions of the component parts in accordance with the above conditional equations; therefore, based on the inner diameter $d_0$ at the entrance of the inlet pipe 1, the inner diameters of the various parts are specified within the ranges shown below.

$1/3\, d_0 \leq D_1 \leq d_0$

$\pi/4 \times d_1^2 \geq A \times B$ (where $A < B$, $B < d_1$)

$d_2 \geq 2\, d_0$

$\pi/4 \times d_2^2 \geq C \times E$ (where $C < E$, $E < d_2$)

$1/2\, d_0 \leq d_3 \leq d_0$

$1/4\, d_0 \leq d_4 \leq 3/4\, d_0$

$3/2\, d_0 \leq D_0 \leq 5/2\, d_0$

$3\, d_0 \leq D_1 \leq 6\, d_0$

Further, the heights of the cylinders and the generating angle $\theta$ of the separation cylinder 5 are specified within the range shown below.

$1/2\, H_1 \leq H_2 \leq H_1$

$3/2\, H_2 \leq H_4 \leq 4\, H_2$

$3.5° \leq \theta \leq 17.5°$

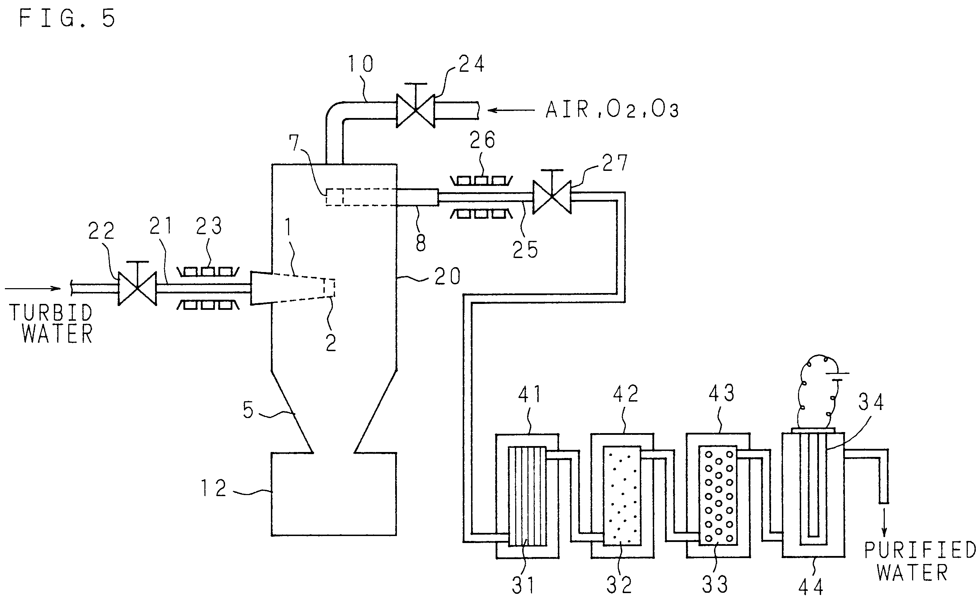

FIG. 5 is a schematic diagram showing the general construction of the water treatment apparatus of the present invention. In FIG. 5, the numeral 20 indicates the water spinning treatment apparatus of the construction shown in FIGS. 1 and 2, and the same parts as those shown in FIGS. 1 and 2 are designated by the same reference numerals. An end of an inlet piping 21 whose other end is connected to a lift pump (not shown) is connected to the inlet pipe 1 of the water spinning treatment apparatus 20. In the inlet piping 21, there is installed a valve 22 for adjusting the flow rate of the untreated water (turbid water) being introduced through it. Furthermore, a magnetizer 23 for generating a magnetic field is installed around the inlet piping 21 in the section thereof adjacent to the inlet pipe 1, so that a magnetic field is applied to the untreated water in the inlet piping 21 before introduction into the water spinning treatment apparatus 20. Also, midway through the gas supply pipe 10 through which air, oxygen, or ozone is introduced into the water spinning treatment apparatus 20, there is installed a valve 24 for adjusting the gas flow rate.

On the other hand, an outlet piping 25 is connected to the outlet pipe 8 of the water spinning treatment apparatus 20. A magnetizer 26 for generating a magnetic field is installed around the outlet piping 25 in the section thereof adjacent to the outlet pipe 8, so that a magnetic field is applied to the treated water discharged from the water spinning treatment apparatus 20 into the outlet piping 25. Furthermore, in the section of the outlet piping 25 on the downstream side of the magnetizer 26, there is installed a valve 27 for adjusting the flow rate of the treated water being discharged. The outlet piping 25 is further passed through a first container 41 containing a fibrous filter 31, a second container 42 containing activated carbon 32, a third container 43 containing ceramic balls 33, and a fourth container 44 having an ultraviolet germicidal lamp 34.

Next, the operation of the above apparatus will be described below. The untreated water pumped by the lift pump is passed through the valve 22, where the flow rate is adjusted, and introduced through the inlet piping 21 into the inlet pipe 1 of the water spinning treatment apparatus 20. The untreated water is agnetized by the magnetizer 23 in the process. The untreated water thus magnetized is introduced into the water spinning treatment apparatus 20 in which impurities contained in the water are separated while the water is being spun. The separated impurities are deposited into the residue container 12, while the purified water is discharged through the outlet pipe 8 into the outlet piping 25. The treatment operation performed in the water spinning treatment apparatus 20 has already been described, and therefore, the description will not be repeated here.

The discharged purified water is magnetized by the magnetizer 26. The flow rate of the purified water being discharged is adjusted by the valve 27. The purified water is further passed through: the first container 41, where impure substances are filtered out by the fibrous filter 31; the second container 42, where odorous and toxic compounds are removed by adsorption on the activated carbon 32; the third container 43, where minerals are added while the water is being passed through the ceramic balls 33; and the fourth container 44, where the water is thoroughly disinfected by the ultraviolet irradiation from the germicidal lamp 34. After that, the purified water is discharged outside.

While the water is purified by the water spinning treatment apparatus 20 with most of the impurities contained in the water being neutralized as inactive, nontoxic residues and discharged into the residue container 12, it is not possible to perfectly purify the water to a degree that fits as drinking water. Therefore, the water purified by the water spinning treatment apparatus 20 is further purified through the fibrous filter 31 and activated carbon 32. In the present embodiment, most of the impurities are removed in the water spinning treatment apparatus 20; therefore, the water admitted to the fibrous filter 31 and activated carbon 32 contains extremely low concentrations of impurities, which means that fibrous filtering materials and activated carbon of short life cycles and with small capacities can be used for an extended period of time at low cost. Furthermore, small quantities of minerals are added to the softened water by bringing it into contact with the ceramic balls 33. This effect is enhanced because of increased amount of dissolved oxygen by the remagnetization of the purified water by the magnetizer 25. Moreover, if the untreated water is heavily contaminated and contains toxic microorganisms, such microorganisms can be killed and removed by the ultraviolet irradiation from the germicidal lamp 34 in the fourth container 44.

The above-described impurity precipitation/separation function is the same one as achieved by centrifugal separation. However, compared with a conventional batch-type centrifugal separator, the above-described apparatus does not require a large power source, is simple in construction, and is inexpensive to manufacture and operate.

We will now describe a working example in which turbid water was purified in accordance with the present invention. In this example, the inlet flow rate of the turbid water was set at 5 $m^3$/hour, and a water spinning treatment apparatus ($d_1$: 60 mm, $v_1$: 20 m/second, $D_0$: 100 mm, $D_1$: 200 mm, $H_3$: 450 mm), designed to separate impurities with the smallest particle size of about 0.1 $\mu$m, was used.

The results showed that the concentration of coliform bacilli was reduced from $5.4 \times 10^5$/cm$^3$ to $1.0 \times 10^5$/cm$^3$, while the concentration of bacteria was reduced from 6,000/cm$^3$ to 3,000/cm$^3$. When we think of the fact that the concentration of ordinary microorganisms can be reduced from 80,000/cm$^3$ to 4,000/cm$^3$ by water magnetization alone, it will be found that the apparatus configuration shown in FIG. 5 is capable of providing an extremely high purification performance.

The above-described embodiment has dealt with the purification of turbid water, but it will be recognized that the present invention is also applicable for desalination of sea water. In that case, substances contained in the sea water are oxidized into oxides (for example, Na into $Na_2O$, Cl into $Cl_2O$, Mg into $MgO$, Fe into $Fe_2O_3$, Mn into $MnO_2$), and their crystallized particles are separated from the sea water. Sea water can be easily desalinized in this manner.

In the above-described embodiment, the water spinning treatment apparatus has been described as having the spin cylinder 3, inner baffle cylinder 4, separation cylinder 5, and riser cylinder 6, each constructed separately to serve each individual function, but it will be appreciated that the same effect can be obtained when these cylinders are fabricated as an integral construction.

The above-mentioned embodiment is one which is used in the northern hemisphere. An embodiment used in the southern hemisphere has the structure wherein the untreated water is spun clockwise as viewed in the direction of gravity.

As described, according to the present invention, undesirable substances can be removed from untreated water efficiently with low power and at low cost even at a location where space limitations are severe. The invention thus provides enormous advantages in such fields as purification of turbid water for drinking purposes, conversion of sea water to fresh water, and activation of dead water.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

## Claims

1. A water treatment method for treating water containing undesirable substances for separation of the undesirable substances contained in the water, comprising the steps of:

introducing untreated water into a treatment chamber in such a manner that the untreated water is spun therein counterclockwise in the northern hemisphere or clockwise in the southern hemisphere as viewed in the direction of gravity; and

discharging the water after treatment from the treatment chamber while maintaining the counterclockwise or clockwise spinning motion.

2. A water treatment method according to claim 1, further comprising the step of applying a magnetic field to the untreated water before introduction into the treatment chamber.

3. A water treatment method according to claim 1, further comprising the step of applying a magnetic field to the treated water discharged from the treatment chamber.

4. A water treatment method according to claim 1, further comprising the steps of:

filtering the discharged treated water through fibrous material and activated carbon; and

bringing the filtered treated water into contact with ceramic material.

5. A water treatment method according to claim 1, wherein

a gas as an oxidizing agent is injected into the untreated water that is being spun.

6. A water treatment method according to claim 1, wherein

the untreated water is turbid water containing impurities, and purified water is obtained from the turbid water.

7. A water treatment method according to claim 1, wherein

the untreated water is sea water, and fresh water is obtained from the sea water.

8. A water treatment apparatus for treating water containing undesirable substances for separation of the undesirable substances contained in the water, comprising:

an inlet pipe through which untreated water is introduced with its velocity increased under pressure;

a spin cylinder in which the untreated water, with its velocity increased under pressure, is spun counterclockwise as viewed in the direction of gravity;

a truncated cone-shaped separation cylinder in which the undesirable substances are separated from the counterclockwise spinning untreated water because of the density deterrence between the undesirable substances and water;

a riser cylinder in which the water with reduced weight after separation of the undesirable substances is caused to rise while being spun counterclockwise; and

an outlet pipe through which the treated water that has risen after separation of the undesirable substances is discharged.

9. A water treatment apparatus according to claim 8, wherein when an entrance diameter of the inlet pipe is denoted as $d_0$, an exit diameter as $d_1$, the diameter of the outlet pipe as $d_2$, the inner diameter at the end of the separation cylinder connected to the spin cylinder as $D_1$, and the angle between the axis and the generators in the separation cylinder as $\theta$, the following conditions are satisfied

$1/3\ d_0 \leqq d_1 \leqq d_0$

$d_2 \geqq 2d_0$

$3\ d_0 \leqq D_1 \leqq 6\ d_0$

$3.5° \leqq \theta \leqq 17.5°$

10. A water treatment apparatus according to claim 8, wherein

the connection between the inlet pipe and the spin cylinder and/or the connection between the riser cylinder and the outlet pipe have a rectangular cross section.

11. A water treatment apparatus for treating water containing undesirable substances for separation of the undesirable substances contained in the water, comprising:

an inlet pipe through which untreated water is introduced with its velocity increased under pressure;

a spin cylinder in which the untreated water, with its velocity increased under pressure, is spun clockwise as viewed in the direction of gravity;

a truncated cone-shaped separation cylinder in which the undesirable substances are separated from the clockwise spinning untreated water because of the density deterrence between the undesirable substances and water;

a riser cylinder in which the water with reduced weight after separation of the undesirable substances is caused to rise while being spun clockwise; and

an outlet pipe through which the treated water that has risen after separation of the undesirable substances is discharged.

**12.** A water treatment apparatus according to claim 11, wherein when an entrance diameter of the inlet pipe is denoted as $d_0$, an exit diameter as $d_1$, the diameter of the outlet pipe as $d_2$, the inner diameter at the end of the separation cylinder connected to the spin cylinder as $D_1$, and the angle between the axis and the generators in the separation cylinder as $\theta$, the following conditions are satisfied

$1/3\ d_0 \leq d_1 \leq d_0$

$d_2 \geq 2d_0$

$3\ d_0 \leq D_1 \leq 6\ d_0$

$3.5° \leq \theta \leq 17.5°$

**13.** A water treatment apparatus according to claim 11, wherein

the connection between the inlet pipe and the spin cylinder and/or the connection between the riser cylinder and the outlet pipe have a rectangular cross section.

FIG. 1

# FIG. 2

FIG. 3

FIG. 4

7

8

E

C

$d_2$

FIG. 5

TURBID WATER

AIR, O₂, O₃

PURIFIED WATER

EP 0 644 159 A2